# EUROPEAN PATENT SPECIFICATION

(11) **EP 4 586 953 B1**
(45) Date of publication and mention of the grant of the patent: **27.05.2026**
(21) Application number: 23776711.6
(22) Date of filing: 14.09.2023
(51) Int. Cl.: A61C 5/66, A61C 19/00

(54) **HEATING DEVICE FOR HEATING DENTAL MATERIAL**
HEIZVORRICHTUNG ZUM ERWÄRMEN VON DENTALMATERIAL
DISPOSITIF DE CHAUFFAGE POUR CHAUFFER UN MATÉRIAU DENTAIRE

(30) Priority: 16.09.2022 US 202263407292 P
(43) Date of publication of application: 23.07.2025
(60) Divisional application: 26174213.4
(73) Proprietor: Solventum Intellectual Properties Company, Maplewood, MN 55144 (US)
(72) Inventor: KIRCHNER, Bastian, 82229 Seefeld (DE); GERLACH, Korbinian, 82229 Seefeld (DE); WELKER, Stefan, 82229 Seefeld (DE); DUWENSEE, Heiko A., 82229 Seefeld (DE); DÖNMEZ, Özcan, 82229 Seefeld (DE); KELZ, Ralf M., 82229 Seefeld (DE)
(74) Representative: Vossius & Partner Patentanwälte Rechtsanwälte mbB
(86) International application number: PCT/IB2023/059157
(87) International publication number: WO 2024/057265

(56) References cited:
- CN-U- 201 469 043
- CN-U- 201 469 043
- FR-A1- 2 701 201
- FR-A1- 2 701 201
- JP-A- S 598 952
- JP-A- S 598 952
- US-B1- 7 166 822
- US-B1- 7 166 822
- US-B2- 7 015 423
- US-B2- 7 015 423

## Description

### Technical Field

The present disclosure relates generally to a heating device and a heating system. Particularly, the present disclosure relates to a heating device and a heating system for heating a dental material.

### Background

Dental materials, in particular dental composite materials for filling cavities in a patient's teeth, are often provided in a package (e.g., syringe or capsule) that allows for storing an amount of dental material. The package also allows for dispensing the dental material from the package directly to a desired location. Although the dental materials are typically formulated to exhibit properties allowing for appropriate handling in many situations, it is often necessary to warm the dental material prior to its introduction into the tooth in order to achieve optimal workability or performance of such dental materials. A common method to make highly filled dental composite materials less viscous is to heat the composite.

There are heating devices that enable direct heating of packages by using a heating element. Further, there is an approach for heating packages using infrared light while the packages are placed in a dispensing device. Although existing approaches provide heating of the dental materials, there is still a need for a heating device which can be used conveniently, and which is energy efficient.

US 7 015 423 B2 relates to a heating device into which a compule of dental material can be inserted to elevate the temperature of the dental material to above ambient temperature prior to clinical use having a base for housing a heating element, a temperature control mechanism for controlling the temperature of the heating element, a power connection for electrically connecting the temperature control mechanism to a source of power and a heating receptacle removably mounted on the base. The heating receptacle comprises a heating tray composed of a conductive material and an upstanding section extending from the heating tray and having a heating chamber open to the atmosphere which is adapted to receive one end of a conventional dispenser in which the compule of dental material is stored for raising the temperature of said dental material in said compule to an elevated temperature.

US 7 166 822 B 1 relates to a device for heating and warming food featuring a base with a central member axially projecting it surface which provides heat from its exterior surface. The base is cooperatively engageable with one or a plurality of cooking containers having central cavities adapted to frictionally engage the central member thereby heating food in the containers from a central axis. Secondary cooking containers are engageable to axial projections in the primary cooking contains to allow two foods to be heated at the same time from a central area.

JP S59 8952 A relates to a dental wax of a dental wax-up forming apparatus that can be used for a work of melting a dental wax to wax up.

### Summary

The invention is defined in the appended claims. Aspects, embodiments and examples disclosed herein which do not fall within the scope of the appended claims do not form part of the invention and are merely provided for illustrative purposes.

In one aspect, the present disclosure provides a heating device for heating a dental material. The heating device includes a housing including a wall and a top opening formed within the wall. The heating device further includes a heating element at least partially received through the top opening of the housing. The heating element includes a base and a pyramidal portion extending from the base in a direction away from the top opening of the housing. The pyramidal portion is at least partially disposed outside the top opening. The heating element is configured to removably receive thereon an attachment receiving a dental material delivery device / delivery system / container, such that the external surface of the pyramidal portion at least partially contacts the attachment. The heating element is configured to heat the attachment, thereby heating the dental material contained in the delivery device / delivery system / container which is received in the attachment.

In another aspect, the present disclosure provides a heating system for heating a dental material. The heating system includes a heating device. The heating device includes a housing including a wall and a top opening formed within the wall. The heating device further includes a heating element at least partially received through the top opening of the housing. The heating element includes a base and a pyramidal portion extending from the base in a direction away from the top opening of the housing. The pyramidal portion is at least partially disposed outside the top opening. The heating system further includes an attachment removably received on the pyramidal portion of the heating element. The attachment is configured to receive a dental material delivery device / delivery system / container therein. An external surface of the pyramidal portion at least partially contacts the attachment removably received on the pyramidal portion. The heating element is configured to heat the attachment upon, thereby heating the delivery device / delivery system / container containing the dental material received in the attachment.

### Brief Description of the Drawings

Exemplary embodiments disclosed herein may be more completely understood in consideration of the following detailed description in connection with the following figures. The figures are not necessarily drawn to scale. Like numbers used in the figures refer to like components. However, it will be understood that the use of a number to refer to a component in a given figure is not intended to limit the component in another figure labeled with the same number.
FIG. 1A is a perspective view of a heating system for heating a dental material, according to an embodiment of the present disclosure;
FIG. 1B is a cross-sectional front view of the heating system of FIG. 1A, according to an embodiment of the present disclosure;
FIGS. 2A and 2B are perspective views of a heating device of the heating system of FIG. 1A, according to an embodiment of the present disclosure;
FIG. 2C is a perspective view of a housing of the heating device of FIG. 2A, according to an embodiment of the present disclosure;
FIGS. 3A and 3B are perspective views of the heating device FIG. 2A, with some components not shown, according to an embodiment of the present disclosure;
FIG. 4A is a top view of a heating element of the heating device of FIG. 2A, according to an embodiment of the present disclosure;
FIG. 4B is a perspective view of the heating element of FIG. 4A, according to an embodiment of the present disclosure;
FIG. 5A is a perspective view of a heating element, according to another embodiment of the present disclosure;
FIG. 5B is a perspective view of a heating element, according to yet another embodiment of the present disclosure;
FIG. 5C is a perspective view of a heating element, according to yet another embodiment of the present disclosure;
FIG. 5D is a perspective view of a heating element, according to yet another embodiment of the present disclosure;
FIG. 6A is a perspective view of an attachment of the heating system of FIG. 1A, according to an embodiment of the present disclosure;
FIG. 6B is an exploded view of the attachment of FIG. 6A, according to an embodiment of the present disclosure;
FIG. 6C is a bottom perspective view of a holder of the attachment of FIG. 6A-6B, according to an embodiment of the present disclosure;
FIG. 7A is a perspective view of an attachment of the heating system of FIG. 1A or FIG. 2A, according to an embodiment of the present disclosure;
FIG. 7B is an exploded view of the attachment of FIG. 7A, according to an embodiment of the present disclosure;
FIG. 7C is a bottom perspective view of a holder of the attachment of FIG. 7A-7B, according to an embodiment of the present disclosure;
FIG. 8A is a perspective view of an attachment that is to be removably received on the heating system of FIG. 2A, according to another embodiment of the present disclosure;
FIG. 8B is a bottom perspective view of a holder of the attachment of FIG. 8A, according to an embodiment of the present disclosure;
FIG. 9A is a perspective view of an attachment that is to be removably received on the heating system of FIG. 2A, according to another embodiment of the present disclosure; and
FIG. 9B is a bottom perspective view of a holder of the attachment of FIG. 9A, according to an embodiment of the present disclosure.

### Detailed Description

In the following description, reference is made to the accompanying figures that form a part thereof and in which various embodiments are shown by way of illustration. It is to be understood that other embodiments are contemplated and may be made without departing from the scope of the present invention as defined by the appended claims. The following detailed description, therefore, is not to be taken in a limiting sense.

As recited herein, all numbers should be considered modified by the term "about". As used herein, "a," "an," "the," "at least one," and "one or more" are used interchangeably.

As used herein as a modifier to a property or attribute, the term "generally,", unless otherwise specifically defined, means that the property or attribute would be readily recognizable by a person of ordinary skill but without requiring absolute precision or a perfect match (e.g., within +/- 20 % for quantifiable properties).

The term "substantially," unless otherwise specifically defined, means to a high degree of approximation (e.g., within +/- 10% for quantifiable properties) but again without requiring absolute precision or a perfect match.

The term "about," unless otherwise specifically defined, means to a high degree of approximation (e.g., within +/- 5% for quantifiable properties) but again without requiring absolute precision or a perfect match.

Terms such as same, equal, uniform, constant, strictly, and the like, are understood to be within the usual tolerances or measuring error applicable to the particular circumstance rather than requiring absolute precision or a perfect match.

As used herein, "at least one of A and B" should be understood to mean "only A, only B, or both A and B".

As used herein, "communicably coupled" refers to a wireless wide area network (WWAN) (e.g., one or more cellular networks), a wireless local area networks (WLANs), Bluetooth, data transfer cables, and / or the like. It may further refer to any wired and / or wireless data transfer medium, not limited to these.

The term "coupled", or "connected" may include direct physical connections between two or more components, or indirect physical connections between two or more components that are connected together by one or more additional components. For example, a first component may be coupled to a second component by being directly connected together or by being connected by a third component.

As used herein, the term "configured to" and like is at least as restrictive as the term "adapted to" and requires actual design intention to perform the specified function rather than mere physical capability of performing such a function.

As used herein, the term "thermally coupled" is defined as having a first object and a second object or matter in relative proximity such that heat is effectively exchanged from the first object to the referenced second object or matter.

As used herein, the term "electrically coupled" or "electrically connected" means direct or indirect coupling by any form of electricity transmission including through the use of rigid, non-rigid, metallic, or non-metallic conductive materials.

As used herein, the term "controller" may refer to one or more microcomputers, processors, application-specific integrated circuits, or any other suitable programmable circuit or combination of circuits.

The term "signal" is used herein to indicate any of its ordinary meanings, including a state of a memory location (or set of memory locations) as expressed on a wire, bus, or other transmission medium.

The present disclosure relates to a heating device and a heating system for heating a dental material. The dental material is generally used to fill cavities in a patient's teeth. It is a common practice to warm the dental material prior to its introduction into the patient's teeth in order to achieve optimal workability or performance of the dental material. There are numerous techniques for heating of packages storing an amount of the dental material which is to be used for filling cavities in the patient's teeth.

A commonly known technique to achieve warming of the dental material is to heat a metal block, which has a multiple of the heat capacity compared to a dental material package (e.g., capsule or syringe), to a desired temperature (e.g., 55 °C to 68 °C). The package is positioned on a plate. However, in this heating technique, only certain types of packaging are approved for exposure to elevated temperature levels. Additionally, such a technique may result in degradation of the dental material that is delivered in multidose packages. In other words, if the dental material is heated too often or for too long, it may degrade and no longer have its desirable material properties after curing (which can manifest itself, for example, in tooth fillings prone to chipping). Moreover, the metal block may be very hot and may cause skin burns to an operator.

Further, conventional heating devices are high energy consuming devices. Also, in conventional heating devices, there may be no provision to heat up a small amount of pure composite dental material outside the delivery packaging. When heating the dental material, a certain target temperature range of the heated dental material is desired. For instance, when heating the dental material to a temperature below the desired target temperature range, the desired dental material properties may not be achieved or may only partially be achieved. Overheating the dental material to a temperature above the desired temperature range and/or for an extended period of time may compromise and/or deteriorate the dental material and/or the container housing the dental material. Furthermore, heating the dental material to a temperature higher than the required and/or desired temperature may cause a waste of the energy consumed for the heating.

Consequently, a device for quickly and efficiently warming dental materials, and that do not result in degradation of the dental materials, is desirable.

The present disclosure provides a heating device for heating a dental material. The heating device includes a housing including a top wall and a top opening formed within the wall. The heating device further includes a heating element at least partially received through the top opening of the housing. The heating element includes a base and a pyramidal portion extending from the base in a direction away from the top opening of the housing. The pyramidal portion is at least partially disposed outside the top opening. The heating element is configured to removably receive thereon an attachment receiving a dental material delivery device / delivery system / container, such that an external surface of the pyramidal portion at least partially contacts the attachment. The heating element is configured to heat the attachment, thereby heating the dental material contained in the delivery device / delivery system / container which is received in the attachment.

At least partial contact of the external surface of the pyramidal portion with the attachment may provide a relatively greater surface area for heat transfer from the heating element to the attachment. In other words, the pyramidal portion of the heating element may provide an optimal heat transfer from the heating element to the attachment and subsequently to the dental material. As a result, minimum time is required to obtain a desirable temperature of the attachment and the dental material. This may improve an efficiency of heat exchange between the attachment and the heating element. Therefore, optimal workability or performance of the dental material may be achieved faster in response to improved heat exchange between the attachment and the heating element. Subsequently, the dental material may be appropriately handled for various applications.

The present disclosure further provides a heating system including the heating device. The heating system further includes an attachment removably received on the pyramidal portion of the heating element. The attachment is configured to receive a dental material delivery device / delivery system / container therein. The heating element is configured to heat the attachment, thereby heating the delivery device containing the dental material received in the attachment.

Furthermore, the operator can choose a desirable attachment depending on a type of the delivery device or delivery system or container or different dosage forms of the dental material (capsule, syringe, only composite material without packaging).

In an embodiment, the attachment includes a holder and a sleeve at least partially surrounding the holder. The sleeve includes a heat insulating material. The heat insulating material of the sleeve may protect an operator from skin burns while handling the plurality of attachments. In some embodiments, the heat insulating material of the sleeve includes one or more thermochromic pigments. The sleeve including the one or more thermochromic pigments changes its color when a temperature of the sleeve is between 50 °C and 65 °C in response to heating of the holder by the heating element. A temperature between 50 °C and 65 °C is a desirable temperature of the sleeve and the dental material for appropriate handling and application of the dental material. The color change of the sleeve may alert or inform the operator about operational readiness of the dental material. Once the color change of the sleeve is observed, the operator may switch off power supply to the heating element or remove the holder away from the heating element to avoid excessive heating of the dental material.

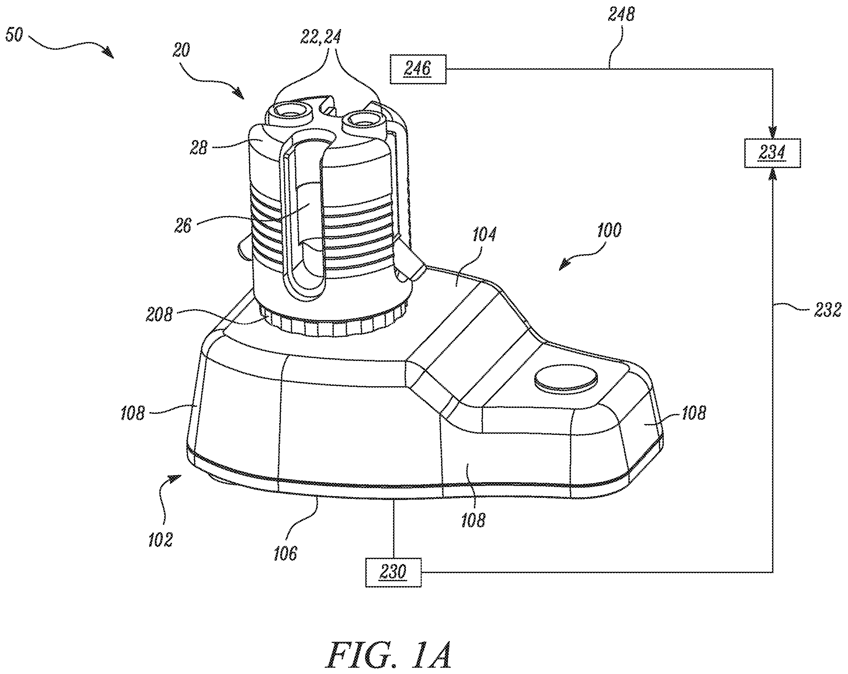

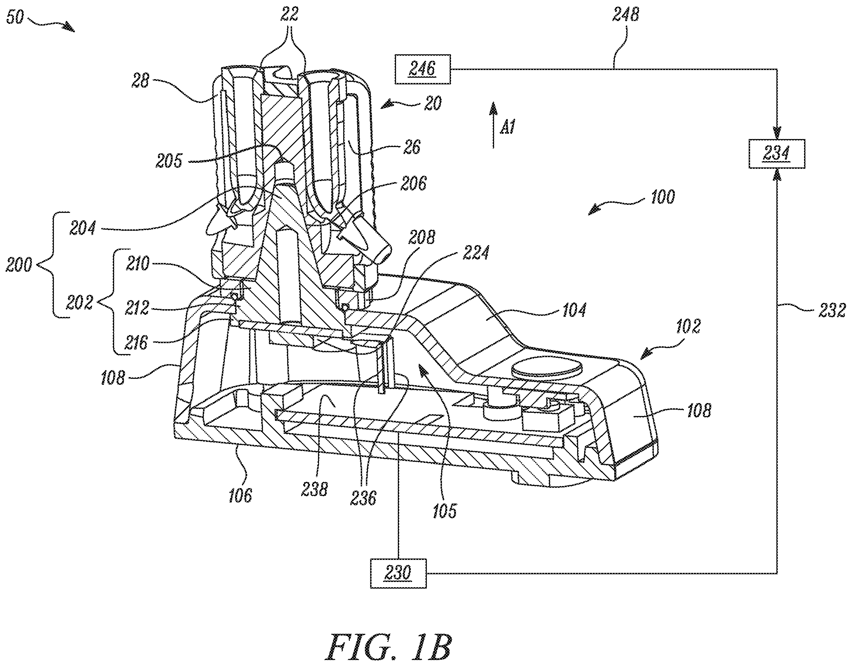

Referring now to the Figures, FIG. 1A is a perspective view of a heating system 50 for heating a dental material, according to an embodiment of the present disclosure. The heating system 50 includes an attachment 20 configured to receive a dental material delivery device / delivery system / container 22 therein. Therefore, the dental material is contained in the delivery device / delivery system / container 22 which is received in the attachment 20. In the illustrated embodiment of FIG. 1A, a capsule 24 is the delivery system 22. The dental material may include resin-based composite materials comprising a matrix and at least one filler, such as filler glasses and glass ceramics. Furthermore, the dental material may also include a glass ionomer cement (GIC). FIG. 1B is a cross-sectional front view of the heating system 50, according to an embodiment of the present disclosure.

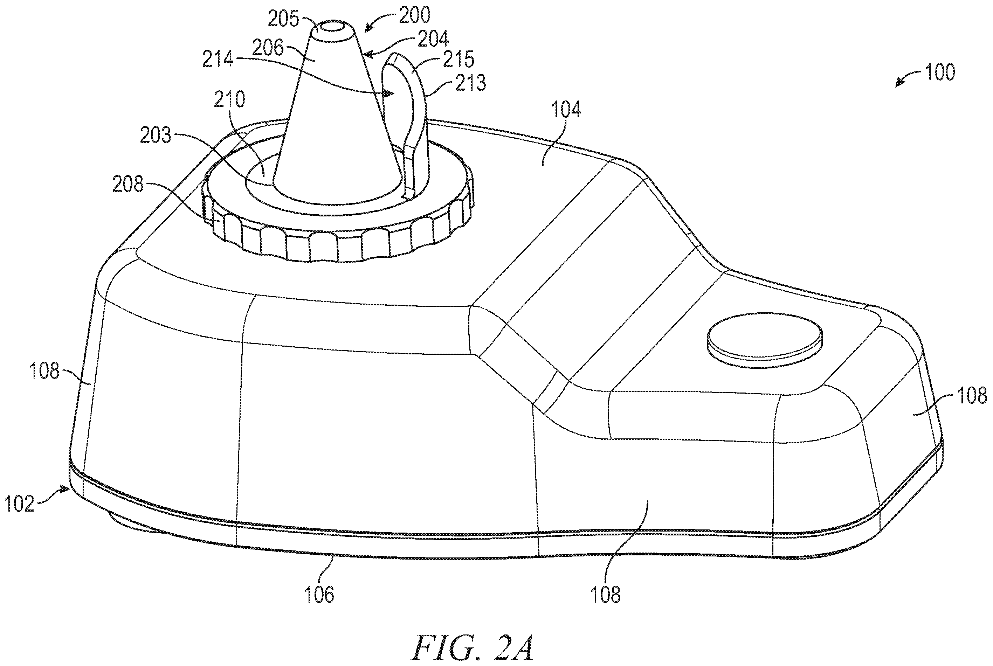

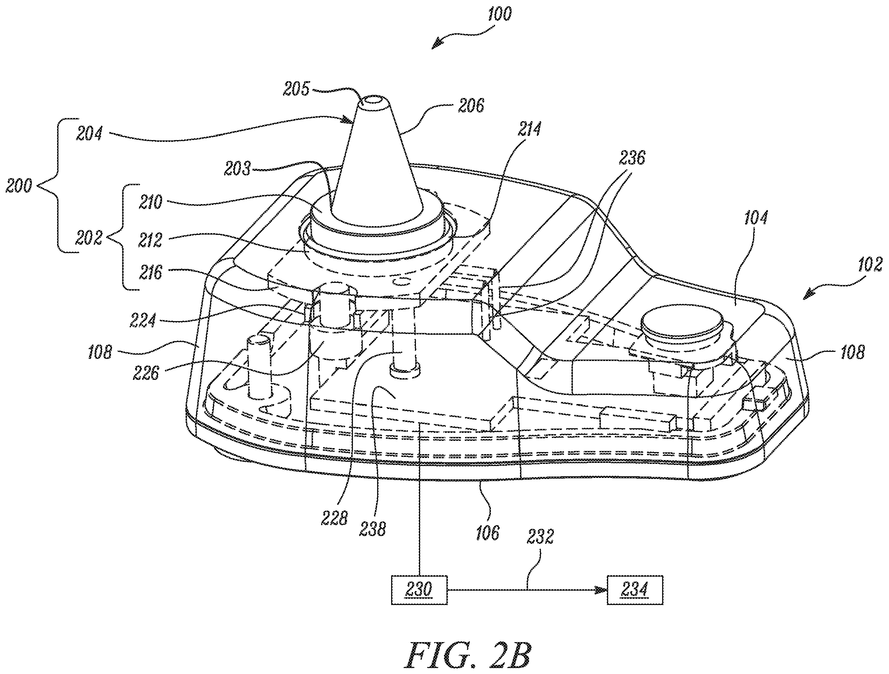

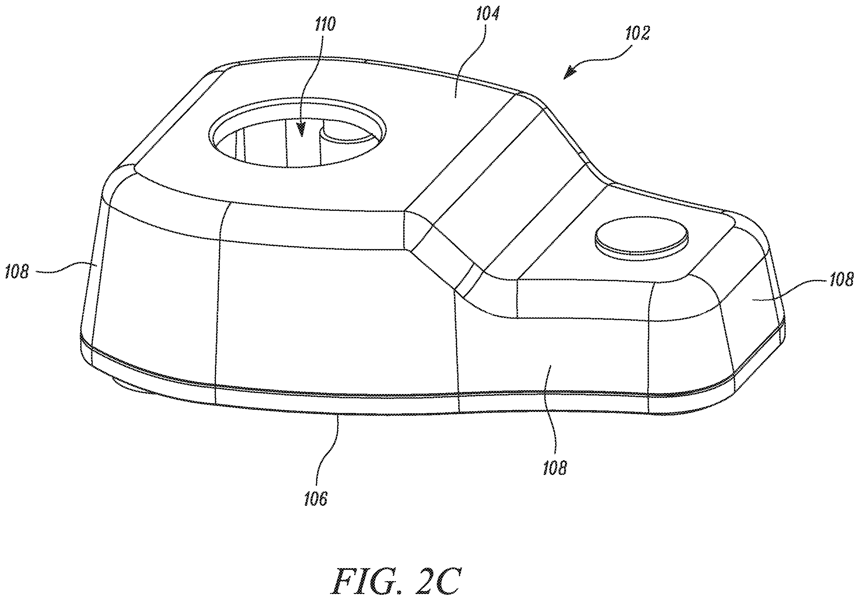

The heating system 50 includes a heating device 100 for heating the dental material. The heating device 100 includes a housing 102. FIG 2A is a perspective view of the heating device 100, according to an embodiment of the present disclosure. FIG. 2B is another perspective view of the heating device 100, with the housing 102 shown as transparent for illustrative purposes. FIG. 2C is a perspective view of the housing 102, according to an embodiment of the present disclosure.

Referring to FIGS. 1A to 2C, the housing 102 includes a wall 104 (interchangeably referred to herein as "a top wall 104"), a bottom wall 106 opposite to the top wall 104, and one or more side walls 108 defined between the top wall 104 and the bottom wall 106. The housing 102 further includes a top opening 110 (shown in FIG. 2C) formed within the top wall 104. While FIGS. 1A to 2C depict the housing 102 that includes four side walls 108, it is to be appreciated that any number of side walls 108 may be employed. Further, it is to be appreciated that any combination of the one or more side walls 108, the top wall 104, and the bottom wall 106 may be integrally formed or formed as separate components that are joined by a suitable coupling mechanism. In some embodiments, the housing 102 may be hollow (or substantially hollow). In this regard, the housing 102 may define an internal cavity 105 (shown in FIG. 1B) in which various components (e.g., electrical components) of the heating device 100 may be housed.

The heating device 100 further includes a heating element 200 at least partially received through the top opening 110 of the housing 102. In some embodiments, the heating element 200 includes aluminum. In some embodiments, the heating element 200 including aluminum is coated with a layer of carbon to withstand wipe disinfection.

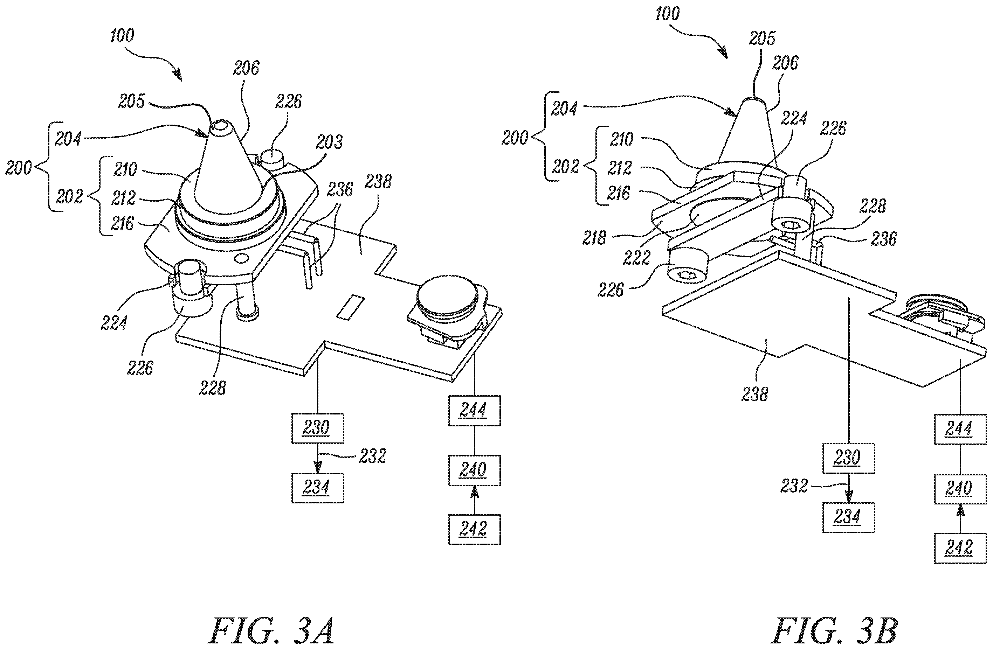

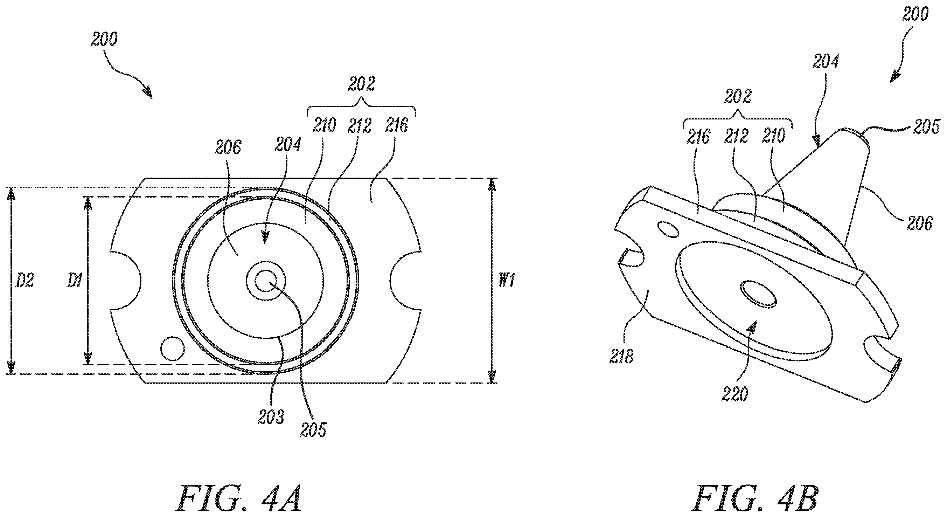

FIGS. 3A and 3B are perspective views of the heating device 100, with some components not shown, according to an embodiment of the present disclosure. Specifically, the housing 102 is not shown in FIGS. 3A and 3B for illustrative purposes. FIG. 4A is a top view of the heating element 200, according to an embodiment of the present disclosure. FIG. 4B is a perspective view of the heating element 200, according to an embodiment of the present disclosure.

Referring to FIGS. 1A to 4B, the heating element 200 includes a base 202 and a pyramidal portion 204 extending from the base 202 in a direction A1 (illustrated in FIG. 1B) away from the top opening 110 of the housing 102. The pyramidal portion 204 is at least partially disposed outside the top opening 110 and the top wall 104. The pyramidal portion 204 includes an external surface 206 that tapers in the direction A1 away from the top wall 104. The attachment 20 is removably received on the pyramidal portion 204 of the heating element 200. Further, the heating element 200 is configured to removably receive thereon the attachment 20 receiving the dental material delivery device / delivery system / container 22, such that the external surface 206 of the pyramidal portion 204 at least partially contacts the attachment 20. In other words, the external surface 206 of the pyramidal portion 204 at least partially contacts the attachment 20 removably received on the pyramidal portion 204 of the heating element 200. The pyramidal portion 204 includes one of a circular cross-section and a polygonal cross section. As shown in FIG. 4A, the pyramidal portion 204 includes the circular cross-section. Further, the external surface 206 of the pyramidal portion 204 is conical. Further, as shown in FIG. 3A, an apex 205 of the pyramidal portion 204 is truncated. The apex 205 of the pyramidal portion 204 is a top flat portion of the pyramidal portion 204. The apex 205 may be substantially parallel to a base 203 of the pyramidal portion 204. In another embodiment, the apex 205 may be inclined at an angle to the base 203 of the pyramidal portion 204.

The heating device 100 further includes an annular fixture element 208 for positioning of the heating element 200 within the top opening 110 of the housing 102. The annular fixture element 208 is disposed on the top wall 104 of the housing 102. Thus, the annular fixture element 208 may position and fix the heating element 200 from outside the housing 102. In some embodiments, the annular fixture element 208 is a screw ring. In some other embodiments, the heating element 200 may be fitted and positioned from an inner surface of the top wall 104 of the housing 102.

The base 202 of the heating element 200 includes a narrow plate 210 disposed outside the housing 102 adjacent to the top opening 110. The pyramidal portion 204 (i.e., conical, as shown in FIG. 3B) extends from the narrow plate 210. As shown in FIG. 4A, the narrow plate 210 is a disc. The narrow plate 210 has a narrow diameter D1 (illustrated in FIG. 4A). The base 202 further includes a wide plate 212 disposed adjacent to the narrow plate 210 opposite to the pyramidal portion 204 and received within the top opening 110 of the housing 102. As shown in FIG. 4A, the wide plate 212 is a disc. The wide plate 212 has a wide diameter D2 (illustrated in FIG. 4A) greater than the narrow diameter D1 of the narrow plate 210. In some embodiments, the heating device 100 further includes a sealing ring 214 (shown in FIG. 2B) disposed around the narrow plate 210 and on the top wall 104 of the housing 102. The sealing ring 214 may prevent any leakage of the dental material from the attachment 20 to the internal cavity 105. In some embodiments, the sealing ring 214 may be disposed outside the top wall 104 of the housing 102, or at an inner surface of the top wall 104 of the housing 102.

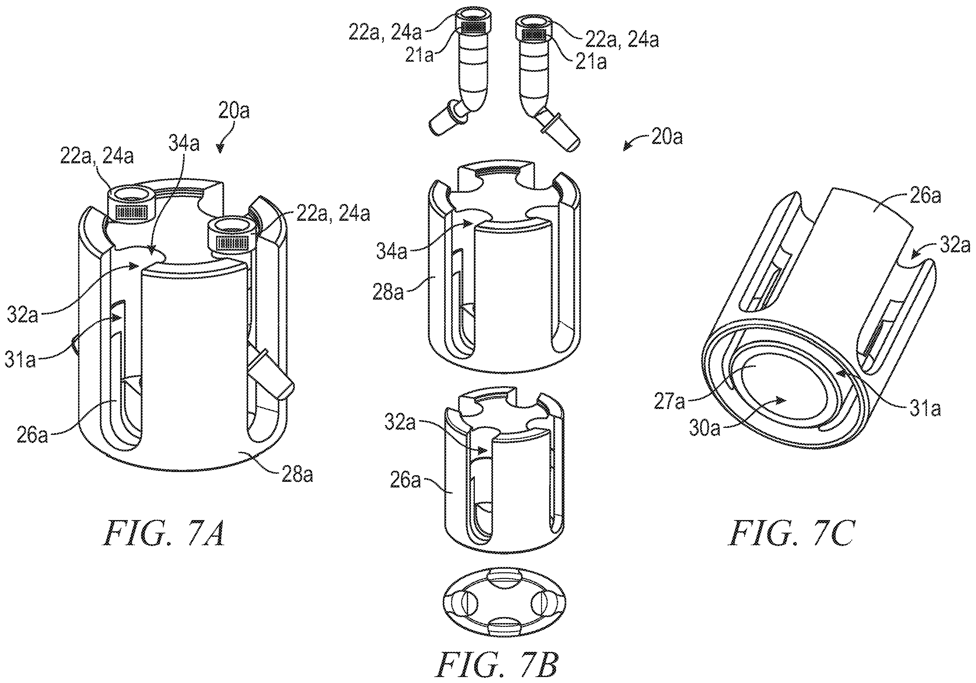

The narrow plate 210 or annular fixture ring 208 may include at least one optional removal ramp 213 as depicted in Fig. 2A. The ramp 213 partially surrounds the pyramidal portion 204 along an arc generally complemental to the cross-sectional shape of the pyramidal portion 204, maintaining a gap between the external surface 206 an interior surface 214 of the ramp 213. The ramp 213 has a decreasing taper in height, as measured between base 202 and the ramp surface 215, when traversing in a clockwise direction about the pyramidal portion. The height is typically less than that of the pyramidal portion, allowing the ramp 213 to fully received within a corresponding slot 31a in an attachment 20a (as depicted and described in Figs. 7A - 7C below). Rotation of the attachment 20a in a counterclockwise direction relative to the pyramidal portion 204 causes the ramp surface 215 to contact the capsule 24a, gradually forcing the capsule 24a away from the base 202 to partially eject the capsule 24a from the holder cutout 32a of attachment 20a. In additional embodiments, the heating element 200 can include two or more ramps each corresponding to a capsule 24a held in the attachment 20a. For instance, the heating element may include four ramps with the bottom end of a given ramp positioned just below the capsule 24a when the attachment 20a is seated on the heating element 200. In any event, the arc length of a ramp is preferably less than the center-to-center distance between any two capsule 24a holder cutouts 32a such that the ramp does not affect the placement of the capsule 24a during heating.

Alternatively, the ramps may be replaced by or used in cooperation with actuators (e.g., springs) that serve to partially eject the capsules 24a with necessity of rotating the attachment 20a relative to the heating element 200. In such instances, the actuator may be in a compressed or other non-kinetic state when the attachment 20 is first seated on the heating element 200. Release of the potential energy stored in the actuator serves to drive the capsule 24a out of the holder cutout 32a.

The narrow plate 210 or annular fixture ring 208 may further, optionally include magnets to attract materials in the attachment 20. Use of magnets can aid securing the attachment 20 in the desired position vis a vis the heating element 200 during operation of the device. The magnets can optionally be electromagnets supplied with electric power via electrical conductors in communication with controller 234.

The base 202 further includes a thermal plate 216 disposed within the housing 102 and adjacent to the wide plate 212 opposite to the narrow plate 210. In some embodiments, the thermal plate 216 includes a maximum width W1 (illustrated in FIG. 4A) greater than the wide diameter D2 of the wide plate 212. In other embodiments, the maximum width W1 of the thermal plate 216 may be smaller than the wide diameter D2 of the wide plate 212. The thermal plate 216 includes a bottom surface 218 (shown in FIG. 3B) opposite to the wide plate 212 and a cavity 220 (shown in FIG. 4B) disposed on the bottom surface 218. In some embodiments, two or more components of the heating element 200 are a single integral component. For example, the pyramidal portion 204, the thermal plate 216, the narrow plate 210, and the wide plate 212 may be integral with each other. In another example, the thermal plate 216, the narrow plate 210, and the wide plate 212 may be integral with each other, and the pyramidal portion 204 is a separate component.

At least partial contact of the external surface 206 of the pyramidal portion 204 with the attachment 20 may provide a relatively greater surface area for heat transfer from the heating element 200 to the attachment 20. In other words, the pyramidal portion 204 of the heating element 200 may provide an optimal heat transfer from the heating element 200 to the attachment 20 and subsequently to the dental material. As a result, minimum time is required to obtain a desirable temperature of the attachment 20 and the dental material. This may improve an efficiency of heat exchange between the attachment 20 and the heating element 200. Therefore, optimal workability or performance of the dental material may be achieved faster in response to improved heat exchange between the attachment 20 and the heating element 200. Subsequently, the dental material may be appropriately handled for various applications.

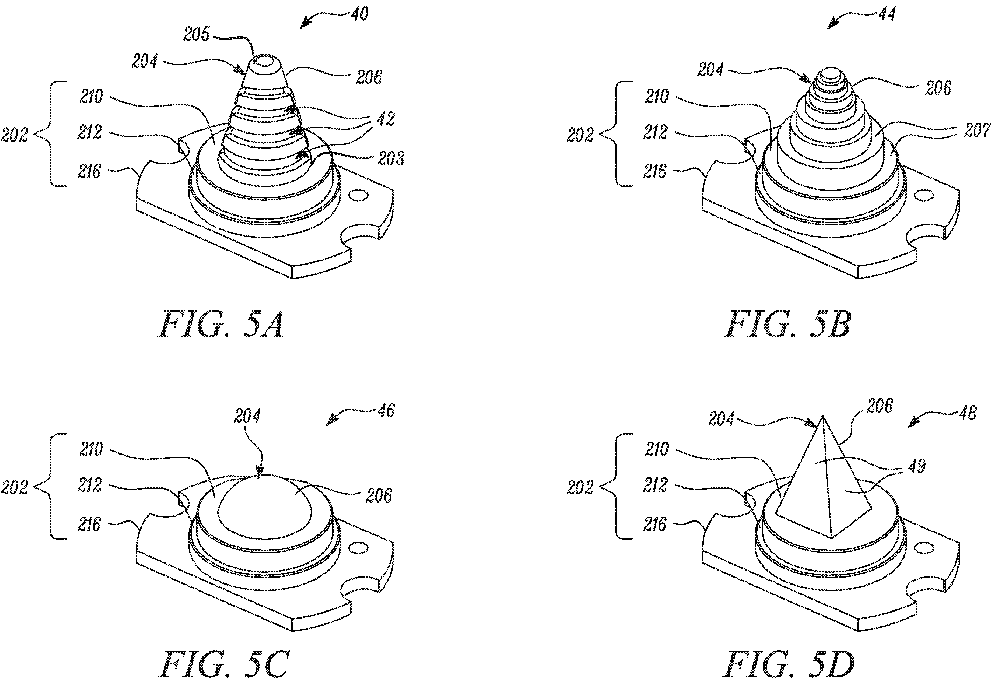

FIG. 5A is a perspective view of a heating element 40, according to another embodiment of the present disclosure. The heating element 40 is substantially similar and functionally equivalent to the heating element 200 of FIGS. 4A and 4B, with similar components being referred to by the same numerals. However, in the heating element 40, the pyramidal portion 204 further includes a plurality of grooves 42 or raised surfaces (not shown) disposed on the external surface 206, designed to increase the surface area of the pyramidal portion 204. The inclusion of grooves 42 on the external surface 206 of the pyramidal portion 204 may enhance heating of the dental material. In FIG. 5A, the plurality of grooves 42 are illustrated as horizontally oriented relative to the base 203 of the pyramidal portion 204. In another embodiment (not shown), the plurality of grooves 42 or raised surfaces may be oriented in a vertical direction from the base 203 of the pyramidal portion 204 upwards towards the apex 205 of the pyramidal portion 204.

FIG. 5B is a perspective view of a heating element 44, according to another embodiment of the present disclosure. The heating element 44 is substantially similar and functionally equivalent to the heating element 200 of FIGS. 4A and 4B, with similar components being referred to by the same numerals. However, in the heating element 44, the external surface 206 of the pyramidal portion 204 is stepped-conical (instead of conical, as shown in FIG. 4A) including a plurality of steps 207.

FIG. 5C is a perspective view of a heating element 46, according to another embodiment of the present disclosure. The heating element 46 is substantially similar and functionally equivalent to the heating element 200 of FIGS. 4A and 4B, with similar components being referred to by the same numerals. However, in the heating element 46, the external surface 206 of the pyramidal portion 204 is hemispherical (instead of conical, as shown in FIG. 4A).

FIG. 5D is a perspective view of a heating element 48, according to another embodiment of the present disclosure. The heating element 48 is substantially similar and functionally equivalent to the heating element 200 of FIGS. 4A and 4B, with similar components being referred to by the same numerals. However, in the heating element 48, the external surface 206 of the pyramidal portion 204 is polygonal-pyramidal (instead of conical, as shown in FIG. 4A) including a plurality of sides 49.

Therefore, with reference to FIGS. 3A to 5D, the external surface 206 of the pyramidal portion 204 is one of conical, stepped-conical, polygonal-pyramidal, and hemispherical shape, each with or without additional grooves or raised surfaces or steps.

Referring again to FIGS. 1A to 4B, the heating device 100 further includes a heating pad 222 (shown in FIG. 3B) thermally coupled to the heating element 200. In some embodiments, the heating pad 222 includes aluminum oxide. The heating pad 222 may be a plate comprising at least aluminum oxide. As shown in FIG. 3B, the heating pad 222 is disc-shaped or angular shaped. In some other embodiments, the heating pad 222 may be of any shape other than disc-shape or angular shape. The cavity 220 is configured to at least partially receive the heating pad 222 therein, such that the heating pad 222 is thermally coupled to the thermal plate 216.

In some embodiments, the heating pad 222 includes a heating foil including one of polyester, positive temperature coefficient (PTC) material, printed polymer, polyimide, silicone, mica, polyethylene naphthalate (PEN), fiber reinforced thermoplastic (FRTP), and polyvinyl chloride (PVC). In some embodiments, the heating pad 222 includes a heating wire (not shown), or an induction coil (not shown) in the attachment 20 and an induction heating module (not shown) in the base 202 of the heating element 200.

In some embodiments, the heating device 100 further includes a securing plate 224 disposed adjacent to the heating pad 222 and the bottom surface 218 of the thermal plate 216. The securing plate 224 extends across the heating pad 222 and the thermal plate 216, such that the heating pad 222 is secured within the cavity 220 of the thermal plate 216. The heating device 100 further includes a plurality of fasteners 226 for coupling the securing plate 224 to the thermal plate 216. The plurality of fasteners 226 may comprise screws, magnets, or combinations thereof. As shown in FIGS. 3A and 3B, two fasteners 226 are used for coupling the securing plate 224 to the thermal plate 216.

The heating device 100 further includes one or more electrical conductors 236 electrically coupled to the heating pad 222 and configured to electrically heat the heating pad 222. The one or more electrical conductors 236 may be aluminum wires, or copper wires. In some embodiments, the heating device 100 further includes a printed circuit board (PCB) 238 mounted proximal to the bottom wall 106 and distal to the top wall 104. The one or more electrical conductors 236 are routed through the PCB 238.

In some embodiments, the heating device 100 further includes a Universal Serial Bus (USB) interface 240 (shown schematically in FIG. 3A) configured to receive electrical power from a power supply socket 242 (shown schematically in FIG. 3A) and electrically coupled to the one or more electric conductors 236. The one or more electrical conductors 236 are configured to be electrically heated through the USB interface 240. In some other embodiments, the heating device 100 may include batteries for supplying electrical power to the heating pad 222, and the batteries may be charged wirelessly. In some embodiments, the heating device 100 may include a rechargeable battery (e.g., a Li-ion battery) for powering the electronic components of the warming device. In this manner, the heating device 100 can be operated as a wireless device. Further, the device may be connectable to an external power source for recharging the battery. Alternatively, the heating device 100 may be powered by an electrical cord that is connectable to a power supply.

In some embodiments, the heating device 100 further includes a heating circuit 244 electrically disposed between the USB interface 240 and the one or more electrical conductors 236. The heating circuit 244 is configured to adjust electrical heating of the one or more electrical conductors 236. The heating circuit 244 may include electrical components, such as diodes, regulators, transistors, and so on. In some embodiments, the USB interface 240 and the heating circuit 244 may be coupled to or disposed on the PCB 238.

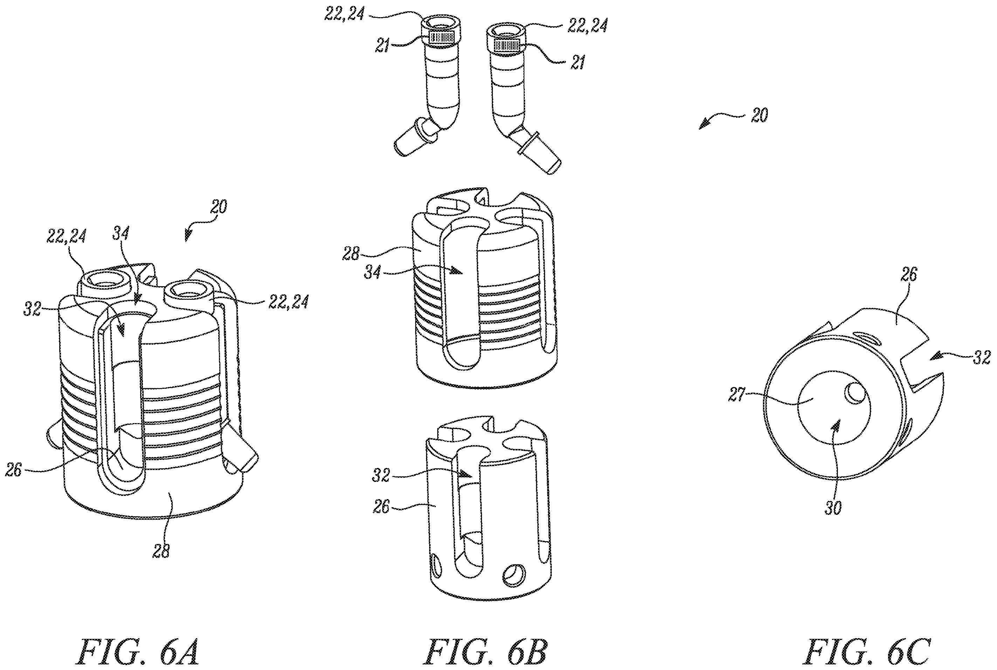

In some embodiments, the heating system 50 further includes a machine readable code 21 (shown in FIG. 6B) associated with the dental material. The machine readable code 21 may be an identifier marked on the delivery device 22 or a component of the attachment 20 receiving the delivery device 22. The machine readable code 21 may be a barcode, a RFID tag, QR code, and the like. The heating device 100 further includes a reader 246 (shown schematically in FIG. 1A) configured to read the machine readable code 21 associated with the dental material and configured to generate a code signal 248 indicative of the machine readable code 21. The reader 246 may be an optical reader. The heating device 100 further includes a controller 234 communicably coupled to the reader 246. The controller 234 may be a control circuit, a computer, a microprocessor, a microcomputer, or a central processing unit. The controller 234 is configured to select a predetermined setpoint temperature from a plurality of predetermined setpoint temperatures based on the code signal 248 received from the reader 246.

The controller 234 is further configured to control an electric power supplied to the one or more electric conductors 236. In embodiments, the power supply may be based on the selected predetermined setpoint temperature and a temperature of the heating element 200. In the same or other embodiments, the controller 234 may cease power supplied to conductors 236 upon failure of the reader 246 to detect the attachment 20 received on the pyramid. Additionally or alternatively, the heating element 200 may include presence detection sensors (e.g., optical, weight, magnetic, electric field, magnetic field, proximity (HF) sensors) coupled to the controller 234 to determine whether the attachment 20 is sufficiently coupled to the heating element 200 to continue heating (i.e., supplying power). The controller 234 may, for example, cease power supplied to conductors 236 upon failure to detect the presence of attachment after a prescribed delay (e.g., 5 seconds). In this way, the heating system 50 can reduce the danger of incidental contact with a heated pyramidal portion during use of the dental material.

In some embodiments, the heating device 100 further includes a sensor tube 228 thermally coupled to the thermal plate 216 of the heating element 200. The sensor tube 228 may be a cylindrical member extending at least between the thermal plate 216 and the PCB 238. The sensor tube 228 may be a made up of aluminum. The heating device 100 further includes a temperature sensor 230 thermally coupled to the sensor tube 228. The temperature sensor 230 is configured to generate a temperature signal 232 indicative of a temperature of the thermal plate 216. Exemplary and non-limiting temperature sensors include a thermistor, IR temperature sensor, thermopile, thermocouple, or a resistance temperature detector (RTD). The controller 234 may be communicably coupled to the temperature sensor 230. In some embodiments, the controller 234 may select the predetermined setpoint temperature based on the code signal 248 and may further simultaneously receive the temperature signal 232 indicative of the temperature of the thermal plate 216. In some embodiments, the controller 234 and the sensor 230 may be coupled to or disposed on the PCB 238.

The heating devices of the present disclosure may further include an indicator light. The indicator light may be activated for the time the heating operation is activated and the indicator light may be otherwise deactivated otherwise. In this manner, a user of the heating device can recognize whether or not the heating operation of the heating device is in process and when it is concluded.

With continued reference to FIGS. 1A to 4B, the heating element 200 is configured to heat the attachment 20, thereby heating the dental material contained in the delivery device / delivery system / container 22 which is received in the attachment 20. In other words, the heating element 200 is configured to heat the attachment 20, thereby heating the delivery device / delivery system / container 22 containing the dental material received in the attachment 20. Therefore, the heating element 200 is configured to heat the dental material upon being heated by the heating pad 222.

FIG. 6A is a perspective view of the attachment 20 of the heating system 50 of FIG. 1A, according to an embodiment of the present disclosure. The attachment 20 is also shown in FIG. 1A. FIG. 6B is an exploded view of the attachment 20. The attachment 20 includes a holder 26 and a sleeve 28 at least partially surrounding the holder 26. FIG. 6C is a bottom perspective view of the holder 26. Referring to FIGS. 6A to 6C, the holder 26 of the attachment 20 includes a cavity 30 having a shape that is complementary to a pyramidal shape of the external surface 206 (shown in FIG. 4A) of the pyramidal portion 204. The cavity 30 of the holder 26 of the attachment 20 at least partially receives the pyramidal portion 204 therein upon placement of the attachment 20 on the pyramidal portion 204. The external surface 206 of the pyramidal portion 204 may at least partially contact an internal surface 27 of the holder 26. In the illustrated embodiment of FIG. 6C, the cavity 30 has a conical shape in order to at least partially receive the pyramidal portion 204 therein.

The holder 26 of the attachment 20 further includes a plurality of holder cutouts 32. The sleeve 28 of the attachment 20 includes a plurality of sleeve cutouts 34 corresponding to and at least partially aligned with the plurality of holder cutouts 32. Each of the plurality of holder cutouts 32 is configured to at least partially receive therein the capsule 24 containing the dental material. As already mentioned earlier, the capsule 24 is the delivery device in the illustrated embodiment of FIG. 6A. In some embodiments, the holder 26 of the attachment 20 includes aluminum. The holder 26 including aluminum may enhance heat transfer from the heating element 200 to the delivery system 22 (i.e., the capsule 24) and subsequently to the dental material. In some embodiments, the attachment 20 including aluminum may be coated with a layer of carbon to withstand wipe disinfection, thermos-disinfection, and autoclaving.

In some embodiments, the sleeve 28 includes a heat insulating material. In some embodiments, the heat insulating material of the sleeve 28 includes one or more thermochromic pigments. The sleeve 28 including the one or more thermochromic pigments changes its color when a temperature of the sleeve 28 is between 50 °C and 65 °C in response to heating of the attachment 20 by the heating element 200 (shown in FIG. 4A). Such a temperature range of the sleeve 28 may indicate optimal heating of the dental material by the heating element 200. A temperature between 50 °C and 65 °C is a desirable temperature of the sleeve 28 and the dental material for appropriate handling and application of the dental material. The color change of the sleeve 28 may alert or inform the operator about operational readiness of the dental material. Once the color change of the sleeve 28 is observed, the operator may switch off power supply to the heating element 200 or remove the holder 26 away from the heating element 200 to avoid excessive heating of the dental material.

In some embodiments, each of the one or more thermochromic pigments includes oxides of titanium, niobium, silicon, aluminum, zinc, hafnium, thorium, tin, thallium, zirconium, beryllium, cobalt, calcium, magnesium, iron and their mixtures. Such thermochromic pigments (i.e., dyes and colorants) can be added to the heat insulating material of the sleeve 28 to serve as an indicating means to show that a particular composition has been temperature activated for optimal use. Reversible and irreversible versions of the one or more thermochromic pigments may be employed depending on the desired embodiment of interest. Reversible thermochromic pigments may be employed where it is desirable to have a multi-use effect or reuse the color change effect. In another example, it may be desirable to record a single color change permanently.

FIG. 7A is a perspective view of the attachment 20a of the heating system 50 of FIG. 2A, according to an embodiment of the present disclosure including the optional removal ramp 213. FIG. 6B is an exploded view of the attachment 20a. The attachment 20a includes a holder 26a and a sleeve 28a at least partially surrounding the holder 26. FIG. 7C is a bottom perspective view of the holder 26a. The attachment 20a is functionally equivalent to the attachment 20 of FIG. 6A, save for the distinctions set out below. Likewise, the sleeve 28a is functionally equivalent to the sleeve 28 of FIG. 6A.

Referring to FIGS. 7A to 7C, the holder 26a of the attachment 20a includes a cavity 30a having a shape that is complementary to a pyramidal shape of the external surface 206 (shown in FIG. 4A) of the pyramidal portion 204, as well as a slot 31a complementary to the geometry of the ramp 213. The cavity 30a of the holder 26a of the attachment 20 at least partially receives the pyramidal portion 204 therein upon placement of the attachment 20 on the pyramidal portion 204. The external surface 206 of the pyramidal portion 204 may at least partially contact an internal surface 27 of the holder 26a, while the shortest portion of the ramp 213 may (but preferably does not) contact the bottom of capsule 24a. In the illustrated embodiment of FIG. 7C, the cavity 30a has a conical shape in order to at least partially receive the pyramidal portion 204 therein, with the slot 31a encircling the cavity 30a.

The holder 26a of the attachment 20a further includes a plurality of holder cutouts 32a, as depicted four cutouts. The sleeve 28a of the attachment 20a includes a plurality of sleeve cutouts 34a corresponding to and at least partially aligned with the plurality of holder cutouts 32a. Each of the plurality of holder cutouts 32a is configured to at least partially receive therein the capsule 24a containing the dental material. The holder cutouts 32a are radially arranged about the center of the holder 26a, with the distance between the center of any two cutouts 32a greater than the arc length of the ramp 213. This spacing ensure the capsules 24a are not inadvertently ejected by the ramp surface 215 when the attachment 20a is properly seated on the heating element 200.

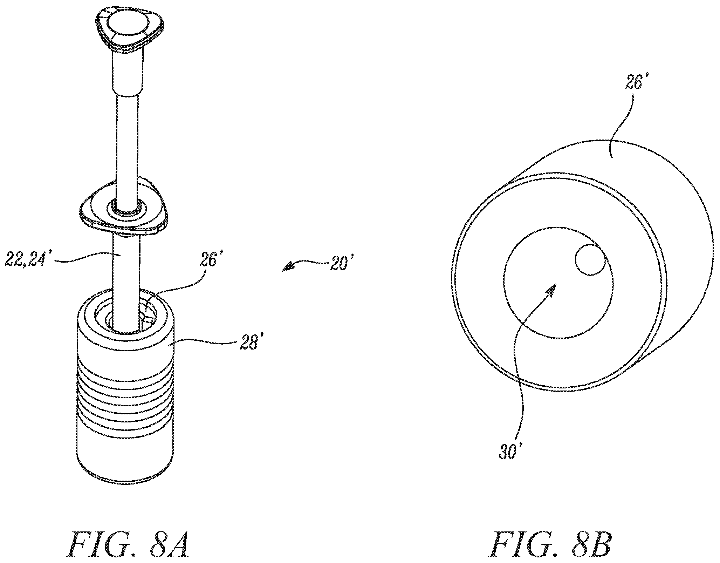

FIG. 8A is a perspective view of an attachment 20', according to an embodiment of the present disclosure. The attachment 20' may be removably received on the pyramidal portion 204 of the heating element 200 (shown in FIG. 2A) of the heating device 100 in a similar way as the attachment 20 is received on the pyramidal portion 204 of the heating element 200. The attachment 20' is functionally equivalent to the attachment 20 of FIG. 6A. The attachment 20' includes a holder 26' and a sleeve 28' at least partially surrounding the holder 26'. The sleeve 28' is functionally equivalent to the sleeve 28 shown in FIG. 6A. However, the sleeve 28' is geometrically different from the sleeve 28.

FIG. 8B is a bottom perspective view of the holder 26'. Referring to FIGS. 8A and 8B, the holder 26' is functionally equivalent to the holder 26 shown in FIG. 6A. However, the holder 26' is geometrically different from the holder 26. The holder 26' of the attachment 20' includes a cavity 30' having a shape that is complementary to a pyramidal shape of the external surface 206 (shown in FIG. 4A) of the pyramidal portion 204. The cavity 30' of the holder 26' of the attachment 20' at least partially receives the pyramidal portion 204 therein upon placement of the attachment 20' on the pyramidal portion 204. Moreover, in the illustrated embodiment of FIG. 7A, the holder 26' of the attachment 20' is configured to at least partially receive therein a syringe 24' containing the dental material. Therefore, as shown in FIG. 8A, the syringe 24' is the delivery device / container 22.

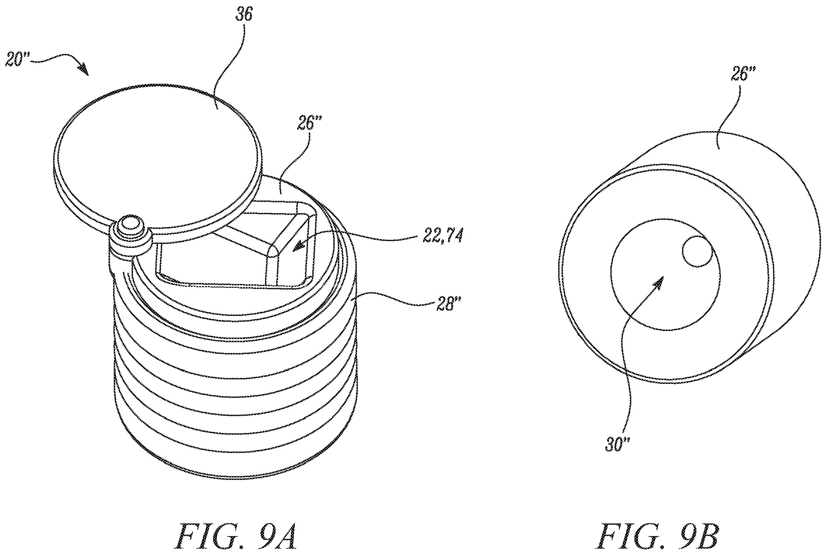

FIG. 9A is a perspective view of an attachment 20", according to an embodiment of the present disclosure. The attachment 20" may be removably received on the pyramidal portion 204 of the heating element 200 (shown in FIG. 2A) of the heating device 100 in a similar way as the attachment 20 is received on the pyramidal portion 204 of the heating element 200. The attachment 20" may be functionally equivalent to the attachment 20 of FIG. 6A. The attachment 20" includes a holder 26" and a sleeve 28" at least partially surrounding the holder 26". The sleeve 28" is functionally equivalent to the sleeve 28 shown in FIG. 6A. However, the sleeve 28" is geometrically different from the sleeve 28.

FIG. 9B is a bottom perspective view of the holder 26". Referring to FIGS. 9A and 9B, the holder 26" is functionally equivalent to the holder 26 shown in FIG. 6A. However, the holder 26" is geometrically different from the holder 26. The holder 26" of the attachment 20" includes a cavity 30" having a shape that is complementary to a pyramidal shape of the external surface 206 (shown in FIG. 4A) of the pyramidal portion 204. The cavity 30" of the holder 26" of the attachment 20" at least partially receives the pyramidal portion 204 therein upon placement of the attachment 20" on the pyramidal portion 204. Moreover, in the illustrated embodiment of FIG. 8A, the holder 26" of the attachment 20' includes a warming cavity 74 configured to receive the dental material therein. Therefore, as shown in FIG. 9A, the warming cavity 74 is the delivery device / delivery system / container 22. In other words, the dental material that is to be heated by the heating device 100 may be directly stored or placed into the warming cavity 74 of the holder 26". The attachment 20" further includes a shield 36 movably disposed on the holder 26" to selectively cover the warming cavity 74. In some embodiments, the shield 36 may not be transmissible in a wavelength range from 300 nanometers (nm) - 500 nm.

With reference to FIGS. 6A to 9B, it is apparent that the operator can choose a desirable attachment (i.e., out of the attachments 20, 20', 20") depending on type of the delivery device delivery system / container 22 or different dosage forms of the dental material (capsule, syringe, only composite material without packaging).

Unless otherwise indicated, all numbers expressing feature sizes, amounts, and physical properties used in the specification and claims are to be understood as being modified by the term "about". Accordingly, unless indicated to the contrary, the numerical parameters set forth in the foregoing specification and attached claims are approximations that can vary depending upon the desired properties sought to be obtained by those skilled in the art utilizing the teachings disclosed herein.

Although specific embodiments have been illustrated and described herein, it will be appreciated by those of ordinary skill in the art that a variety of alternate and/or equivalent implementations can be substituted for the specific embodiments shown and described without departing from the scope of the present invention as defined by the appended claims. This application is intended to cover any adaptations or variations of the specific embodiments discussed herein. Therefore, it is intended that this disclosure be limited only by the claims that follow.

## Claims

1. A heating device (100) for heating a dental material, the heating device comprising:
a housing (102) comprising a wall (104) and a top opening (110) formed within the wall; and
a heating element (200) at least partially received through the top opening of the housing, the heating element comprising a base (202) and a pyramidal portion (204) extending from the base in a direction away from the top opening of the housing, wherein the pyramidal portion is at least partially disposed outside the top opening;
wherein the heating element is configured to removably receive thereon an attachment (20) receiving a dental material delivery device / delivery system / container (22), such that an external surface of the pyramidal portion at least partially contacts the attachment, and wherein the heating element is configured to heat the attachment, thereby heating the dental material contained in the delivery device / delivery system / container which is received in the attachment,
further comprising:
a heating pad (222) thermally coupled to the heating element; and
one or more electrical conductors (236) electrically coupled to the heating pad and configured to electrically heat the heating pad,
**characterised in that** the base comprises a narrow plate (210) disposed outside the housing adjacent to the top opening, and wherein the pyramidal portion extends from the narrow plate,
wherein the base further comprises a wide plate (212) disposed adjacent to the narrow plate opposite to the pyramidal portion and received within the top opening of the housing, and wherein the wide plate comprises a wide diameter (D2) greater than a narrow diameter (D1) of the narrow plate, and
wherein the base further comprises a thermal plate (216) disposed within the housing and adjacent to the wide plate opposite to the narrow plate, wherein the thermal plate comprises a bottom surface (218) opposite to the wide plate and a cavity (220) disposed on the bottom surface, and wherein the cavity is configured to at least partially receive the heating pad therein, such that the heating pad is thermally coupled to the thermal plate.

2. The heating device of claim 1, further comprising a sealing ring (214) disposed around the narrow plate and on the wall of the housing (102).

3. The heating device (100) of claim 1, wherein the thermal plate (216) comprises a maximum width (W1) greater than the wide diameter (D2) of the wide plate.

4. The heating device (100) of claim 1, wherein two or more components of the heating element (200) are a single integral component.

5. The heating device (100) of any one of claims 1, 3 or 4, further comprising:
a securing plate (224) disposed adjacent to the heating pad (222) and the bottom surface (218) of thermal plate, wherein the securing plate extends across the heating pad and the thermal plate, such that the heating pad is secured within the cavity (220) of the thermal plate; and
a plurality of fasteners (226) coupling the securing plate to the thermal plate.

6. The heating device (100) of any one of claims 1, 3 or 4, further comprising a sensor tube (228) thermally coupled to the thermal plate (216) of the heating element (200) and a temperature sensor (230) thermally coupled to the sensor tube, wherein the temperature sensor is configured to generate a temperature signal (232) indicative of a temperature of the thermal plate.

7. The heating device (100) of any one of claims 3 to 5, further comprising:
a reader (246) configured to read machine readable code (21) associated with the dental material and configured to generate a code signal (248) indicative of the machine readable code; and
a controller (234) communicably coupled to the reader, wherein the controller is configured to:
select a predetermined setpoint temperature from a plurality of predetermined setpoint temperatures based on the code signal received from the reader; and
control an electric power supplied to the one or more electric conductors (236) based on the selected predetermined setpoint temperature and a temperature of the heating element.

8. The heating device (100) of any of the preceding claims, wherein the pyramidal portion (204) further comprises a plurality of grooves (42) or raised surfaces disposed on the external surface, designed to increase the surface area of the pyramidal portion.

## Patentansprüche

1. Eine Heizvorrichtung (100) zum Erhitzen eines dentalen Materials, die Heizvorrichtung aufweisend:
ein Gehäuse (102), aufweisend eine Wand (104) und eine innerhalb der Wand ausgebildete obere Öffnung (110); und
ein Heizelement (200), das mindestens teilweise über die obere Öffnung des Gehäuses aufgenommen ist, das Heizelement aufweisend eine Basis (202) und einen pyramidenförmigen Abschnitt (204), der sich von der Basis in eine Richtung weg von der oberen Öffnung des Gehäuses erstreckt, wobei der pyramidenförmige Abschnitt mindestens teilweise außerhalb der oberen Öffnung angeordnet ist;
wobei das Heizelement konfiguriert ist, um eine Anbringung (20) lösbar darauf aufzunehmen, die eine Abgabevorrichtung / ein Abgabesystem / einen Behälter (22) für dentales Material derart aufnimmt, dass eine äußere Oberfläche des pyramidenförmigen Abschnitts die Anbringung mindestens teilweise berührt, und wobei das Heizelement konfiguriert ist, um die Anbringung zu erhitzen, wodurch das dentale Material, das in der Abgabevorrichtung / dem Abgabesystem / dem Behälter enthalten ist, die/das/der in der Anbringung aufgenommen ist, erhitzt wird,
ferner aufweisend:
eine Heizmatte (222), die an das Heizelement thermisch gekoppelt ist; und
einen oder mehrere elektrische Leiter (236), die an die Heizmatte elektrisch gekoppelt sind und konfiguriert sind, um die Heizmatte elektrisch zu erhitzen,
**dadurch gekennzeichnet, dass** die Basis eine schmale Platte (210) aufweist, die außerhalb des Gehäuses angrenzend an die obere Öffnung angeordnet ist, und wobei sich der pyramidenförmige Abschnitt von der schmalen Platte erstreckt,
wobei die Basis ferner eine breite Platte (212) aufweist, die angrenzend an die schmale Platte gegenüber dem pyramidenförmigen Abschnitt angeordnet und innerhalb der oberen Öffnung des Gehäuses aufgenommen ist, und wobei die breite Platte einen breiten Durchmesser (D2) aufweist, der größer als ein schmaler Durchmesser (D1) der schmalen Platte ist, und
wobei die Basis ferner eine thermische Platte (216) aufweist, die innerhalb des Gehäuses und angrenzend an die breite Platte gegenüber der schmalen Platte angeordnet ist, wobei die thermische Platte eine untere Oberfläche (218) gegenüber der breiten Platte und einen Hohlraum (220) aufweist, der auf der unteren Oberfläche angeordnet ist, und wobei der Hohlraum konfiguriert ist, um die Heizmatte mindestens teilweise darin derart aufzunehmen, dass die Heizmatte an die thermische Platte thermisch gekoppelt ist.

2. Die Heizvorrichtung nach Anspruch 1, ferner aufweisend einen Dichtungsring (214), der um die schmale Platte herum und an der Wand des Gehäuses (102) angeordnet ist.

3. Die Heizvorrichtung (100) nach Anspruch 1, wobei die thermische Platte (216) eine maximale Breite (W1) aufweist, die größer als der breite Durchmesser (D2) der breiten Platte ist.

4. Die Heizvorrichtung (100) nach Anspruch 1, wobei zwei oder mehr Komponenten des Heizelements (200) eine einzige integrale Komponente sind.

5. Die Heizvorrichtung (100) nach einem der Ansprüche 1, 3 oder 4, ferner aufweisend:
eine Sicherungsplatte (224), die angrenzend an der Heizmatte (222) und der unteren Oberfläche (218) der thermischen Platte angeordnet ist, wobei sich die Sicherungsplatte über die Heizmatte und die thermische Platte derart erstreckt, dass die Heizmatte innerhalb des Hohlraums (220) der thermischen Platte gesichert ist; und
eine Vielzahl von Befestigungsmitteln (226), die die Sicherungsplatte an die thermische Platte koppeln.

6. Die Heizvorrichtung (100) nach einem der Ansprüche 1, 3 oder 4, ferner aufweisend ein Fühlerrohr (228), das an die thermische Platte (216) des Heizelements (200) thermisch gekoppelt ist, und einen Temperaturfühler (230), der an das Fühlerrohr thermisch gekoppelt ist, wobei der Temperaturfühler konfiguriert ist, um ein Temperatursignal (232) zu erzeugen, das eine Temperatur der thermischen Platte anzeigt.

7. Die Heizvorrichtung (100) nach einem der Ansprüche 3 bis 5, ferner aufweisend:
einen Leser (246), der konfiguriert ist, um maschinenlesbaren Code (21), der mit dem dentalen Material assoziiert ist, zu lesen und konfiguriert ist, um ein Codesignal (248) zu erzeugen, das den maschinenlesbaren Code anzeigt; und
eine Steuerung (234), die an den Leser kommunikativ gekoppelt ist, wobei die Steuerung zu Folgendem konfiguriert ist:
Auswählen einer vorbestimmten Solltemperatur aus einer Vielzahl von vorbestimmten Solltemperaturen basierend auf dem Codesignal, das von dem Leser empfangen wird; und
Steuern einer elektrischen Leistung, die an die eine oder mehreren elektrischen Leiter (236) geliefert wird, basierend auf der ausgewählten vorbestimmten Solltemperatur und einer Temperatur des Heizelements.

8. Die Heizvorrichtung (100) nach einem der vorstehenden Ansprüche, wobei der pyramidenförmige Abschnitt (204) ferner eine Vielzahl von Nuten (42) oder erhabenen Oberflächen aufweist, die auf der äußeren Oberfläche angeordnet sind, die ausgelegt sind, um den Oberflächenbereich des pyramidenförmigen Abschnitts zu vergrößern.

## Revendications

1. Dispositif de chauffage (100) permettant de chauffer un matériau dentaire, le dispositif de chauffage comprenant :
un logement (102) comprenant une paroi (104) et une ouverture supérieure (110) formée au sein de la paroi ; et
un élément de chauffage (200) reçu au moins partiellement à travers l'ouverture supérieure du logement, l'élément de chauffage comprenant une base (202) et une partie pyramidale (204) s'étendant à partir de la base dans une direction à l'écart de l'ouverture supérieure du logement, dans lequel la partie pyramidale est au moins partiellement disposée à l'extérieur de l'ouverture supérieure ;
dans lequel l'élément de chauffage est conçu pour recevoir de manière amovible sur celui-ci un accessoire (20) recevant un dispositif de délivrance/système de délivrance/récipient de matériau dentaire (22), de telle sorte qu'une surface externe de la partie pyramidale vient au moins partiellement en contact avec l'accessoire, et dans lequel l'élément de chauffage est conçu pour chauffer l'accessoire, en chauffant de ce fait le matériau dentaire contenu dans le dispositif de délivrance/système de délivrance/récipient qui est reçu dans l'accessoire,
comprenant en outre :
un tapis chauffant (222) couplé thermiquement à l'élément de chauffage ; et
un ou plusieurs conducteurs électriques (236) couplés électriquement au tapis chauffant et conçus pour chauffer électriquement le tapis chauffant,
**caractérisé en ce que** la base comprend une plaque étroite (210) disposée à l'extérieur du logement, adjacente à l'ouverture supérieure, et dans lequel la partie pyramidale s'étend à partir de la plaque étroite,
dans lequel la base comprend en outre une plaque large (212) disposée adjacente à la plaque étroite opposée à la partie pyramidale et reçue au sein de l'ouverture supérieure du logement, et dans lequel la plaque large comprend un diamètre large (D2) supérieur à un diamètre étroit (D1) de la plaque étroite, et
dans lequel la base comprend en outre une plaque thermique (216) disposée au sein du logement et adjacente à la plaque large opposée à la plaque étroite, dans lequel la plaque thermique comprend une surface inférieure (218) opposée à la plaque large et une cavité (220) disposée sur la surface inférieure, et dans lequel la cavité est conçue pour recevoir au moins partiellement le tapis chauffant à l'intérieur de celle-ci, de telle sorte que le tapis chauffant est couplé thermiquement à la plaque thermique.

2. Dispositif de chauffage selon la revendication 1, comprenant en outre une bague d'étanchéité (214) disposée autour de la plaque étroite et sur la paroi du logement (102).

3. Dispositif de chauffage (100) selon la revendication 1, dans lequel la plaque thermique (216) comprend une largeur maximale (W1) supérieure au diamètre large (D2) de la plaque large.

4. Dispositif de chauffage (100) selon la revendication 1, dans lequel deux composants ou plus de l'élément de chauffage (200) sont un unique composant intégral.

5. Dispositif de chauffage (100) selon l'une quelconque des revendications 1, 3 ou 4, comprenant en outre :
une plaque de fixation (224) disposée adjacente au tapis chauffant (222) et à la surface inférieure (218) de la plaque thermique, dans lequel la plaque de fixation s'étend à travers le tapis chauffant et la plaque thermique, de telle sorte que le tapis chauffant est fixé au sein de la cavité (220) de la plaque thermique ; et
une pluralité d'attaches (226) accouplant la plaque de fixation à la plaque thermique.

6. Dispositif de chauffage (100) selon l'une quelconque des revendications 1, 3 ou 4, comprenant en outre un tube capteur (228) couplé thermiquement à la plaque thermique (216) de l'élément de chauffage (200) et un capteur de température (230) couplé thermiquement au tube capteur, dans lequel le capteur de température est configuré pour générer un signal de température (232) indiquant une température de la plaque thermique.

7. Dispositif de chauffage (100) selon l'une quelconque des revendications 3 à 5, comprenant en outre :
un lecteur (246) configuré pour lire un code lisible par machine (21) associé au matériau dentaire et configuré pour générer un signal de code (248) indiquant le code lisible par machine ; et
un organe de commande (234) couplé par communication au lecteur, dans lequel l'organe de commande est configuré pour :
sélectionner une température de consigne prédéterminée parmi une pluralité de températures de consigne prédéterminées en fonction du signal de code reçu en provenance du lecteur ; et
commander une puissance électrique fournie aux un ou plusieurs conducteurs électriques (236) en fonction de la température de consigne prédéterminée sélectionnée et d'une température de l'élément de chauffage.

8. Dispositif de chauffage (100) selon l'une quelconque des revendications précédentes, dans lequel la partie pyramidale (204) comprend en outre une pluralité de rainures (42) ou de surfaces surélevées disposées sur la surface externe, destinées à augmenter la surface de la partie pyramidale.
